# EUROPEAN PATENT SPECIFICATION

(11) **EP 2 204 946 B1**
(45) Date of publication and mention of the grant of the patent: **03.08.2011**
(21) Application number: 09360001.3
(22) Date of filing: 05.01.2009
(51) Int. Cl.: H04L 12/18

(54) **Message transmission**
Nachrichtenübertragung
Transmission de messages

(43) Date of publication of application: 07.07.2010
(73) Proprietor: Alcatel Lucent, 75008 Paris (FR)
(72) Inventor: Drevon, Nicolas, 75016 Paris (FR); Casati, Alessio, Swindon, Wiltshire SN5 5BG (GB)
(74) Representative: Sarup, David Alexander

(56) References cited:
- US-A1- 2004 203 562
- IMIELINSKI J NAVAS T: "RFC 2009: GPS-Based Addressing and Routing" GPS-BASED ADDRESSING AND ROUTING, XX, XX, 30 November 1996 (1996-11-30), pages 1-27, XP002131778
- ELAARAG H ET AL: "A reliable congestion control mechanism for geocasting in mobile wireless networks" INTERNATIONAL JOURNAL OF NETWORK MANAGEMENT WILEY UK, vol. 13, no. 5, September 2003 (2003-09), pages 375-387, XP002530292 ISSN: 1055-7148
- PATENT ABSTRACTS OF JAPAN 2007, & JP 2007 243718 A (MATSUSHITA ELECTRIC IND CO LTD), 20 September 2007 (2007-09-20) & JP 2007 243718 A (MATSUSHITA ELECTRIC IND CO LTD) 20 September 2007 (2007-09-20)

## Description

### FIELD OF THE INVENTION

The present invention relates to a method of transmitting a message to user equipment within a telecommunications network, a controller operable to transmit a message to user equipment within a telecommunications network, a base station and a computer program product.

### BACKGROUND OF THE INVENTION

It is often desired to transmit a message to many user equipment within a telecommunications network. For example, government agencies wish to communicate an alert warning of an impending emergency such as, for example, a tsunami, earthquake or other potential emergency, to user equipment within a telecommunications network in order to attempt to avert or mitigate the consequences of such a potentially catastrophic event.

In a telecommunications network, such as that defined by the Third Generation Partnership Project (3GPP) in document S2-085143, it is envisaged that a cell broadcast entity (such as a government agency) sends an emergency broadcast request to a cell broadcast centre of a network operator. The cell broadcast centre utilises information within the emergency broadcast request to identify which mobility management entities need to be contacted. Those mobility management entities receive a distribute warning message request and reply with a distribute warning message response. Each mobility management entity then communicates with every base station by sending each base station a distribute warning message request. Each base station then responds by sending a distribute warning message response to the mobility management entity. The base stations then schedule the transmission of the warning message to user equipment.

IMIELINSKI J NAVAS T: "RFC 2009: GPS-Based Addressing and Routing" GPS-BASED ADDRESSING AND ROUTING, XX, XX, 30 November 1996, pages 1-27, discloses a GPS-multicast routing scheme in which messages are routed from a sender to a mobile support station in which each partition and atom is mapped to a multicast address. Each mobile support station joins multicast groups for all partitions which intersect its range. Mobile support stations covering the target area of geographic mail should acknowledge those messages.

ELAARAG H ET AL: "A reliable congestion control mechanism for geocasting in mobile wireless networks" INTERNATIONAL JOURNAL OF NETWORK MANAGEMENT, WILEY UK, vol. 13, no. 5, September 2003, pages 375-387, ISSN 1055-7148 discloses a congestion control mechanism for geocasting in mobile wireless networks. Multicast groups are generated, and if a host wants to receive a multicast message, it has to join a particular group first. Senders then multicast messages to this group. All the group members receive the message. Two acknowledgement aggregation methods are disclosed: in MAAM a single acknowledgement is sent to the sender from the base station; in MAAM/LR an optional caching mechanism is implemented in the base station to accommodate the different speeds of mobile hosts.

JP 2007 243718 discloses the use of a unicast/multicast bit in an Ethernet frame to identify multicast messages used in handover of mobile terminals between base stations. When handover is to occur, a local multicast address is generated utilising the U/M bit, together with the area code and location code of the base stations forming the group.

US 2004/203562 discloses a cellular base station broadcast system. An emergency broadcast station generates a signal representing an emergency broadcast message that contains a frequency of an accessible main emergency channel at the emergency broadcast station and a priority level classifying the emergent or impendent disaster/related situation. The signal is transmitted to one or more base stations, each serving a plurality of users of the system, which in turn sends the signal to the users. The users tune to the frequency of the channel to receive the emergency broadcast message.

It is desired to provide an improved technique for transmitting messages to user equipment.

### SUMMARY OF THE INVENTION

According to a first aspect of the present invention, there is provided a method of transmitting a message to user equipment within a telecommunications network as claimed in claim 1.

The first aspect recognises that messages, such as alert messages, may need to be delivered by the network to a plurality of base stations within a relatively short time period. Achieving such a short time period in an environment where control is highly centralised is difficult to achieve. This is because each message is transmitted to each base station sequentially and so if, for example, a controller (such as an mobility management entity) needs to communicate with a large number of base stations then this can take a long time. Furthermore, the first aspect also recognises that such message may be transmitted at a time when disruption may be occurring to the network or when the load on the network is high due to increases in traffic from user equipment as a result of any unfolding emergency. Accordingly, those sequential messages may take longer to transmit than usual and many retransmissions may be necessary to ensure that all base stations are communicated with.

Accordingly, when a message is received to be transmitted to user equipment within a particular geographical area of the telecommunications network, one or more multicast internet protocol (IP) addresses are identified. These multicast IP addresses are identified as being associated with base stations which provide coverage within the particular geographical area. The message is then transmitted with the multicast IP address over the IP network to be received by base stations. In this way, each base station identified by the multicast IP address will simultaneously receive the message, rather than each individual base station needing to have its own dedicated message sent to each base station sequentially. It will be appreciated that this not only significantly speeds the time taken for identified base stations to receive the message, it also reduces the amount of traffic required since the message is transmitted in a multicast manner. Furthermore, only those base stations which are associated with the multicast IP address will act on the message, all other base stations may ignore it. Accordingly, this helps to ensure that the message is only relayed to user equipment in a particular geographical region, rather than being delivered to all user equipment supported by all base stations associated with a particular controller.

In other words, when an message is received which is to be delivered to all the base stations within a specific area, the message is sent to all base stations that need to receive it by sending the message to all the multicast addresses that are intended to cover the entire geographical region to be alerted. This significantly reduces the number of message that need to be sent to the intended base stations in order for them to receive the message. For example, should a region including 3,000 base stations be affected, a unicast solution would be to send 3,000 messages (excluding retransmissions due to errors), one to each base station. In a multicast arrangement, it may sufficient to send a single, or typically no more than a few, messages to a single multicast address. It will appreciated that this reduces the amount of messages to be sent by orders of magnitude and enable tight time constraints on the delivery of messages to be achieved at an acceptable cost even in an architecture having highly centralised controllers.

The list may include, for each message sent, an indication of each base station which has acknowledged receipt of that message. This information may be used to provide certainty that the message has been distributed within the geographical area or to identify potential areas of severe disruption.

Given that an indication has been received of which bas stations are associated with a particular multicast IP address, and a list is generated of those base stations which have acknowledged the multicast message, it is possible to therefore determine those base stations which have not acknowledged receipt of that multicast message. This information may be used to identify areas where base stations cannot be communicated with and/or to identify those base stations to which the message may need to be retransmitted.

A determination can be made of whether it would be more efficient to retransmit the multicast message to all base stations or whether it would be more efficient to perform a conventional unicast transmission to the outstanding base stations.

In one embodiment, the method comprises the step of: allocating unique multicast IP addresses to be associated with predefined geographical areas. Accordingly, each particular different geographical area or region is associated with a unique multicast IP address. This helps to ensure that any messages intended for those geographical regions can be efficiently routed. It will be appreciated that these geographical regions may overlap or be sub-regions of another geographical region. Typically, these geographical regions will be defined by a requesting authority, such as a government agency.

In one embodiment, the method comprises the step of: receiving an indication of each multicast IP address associated with each base station. By receiving an indication of which multicast IP addresses are associated with each base station, it is possible to determine which base stations are associated with each geographical region. It will be appreciated that base stations will typically be associated with more than one geographical region and will therefore be associated with more than one multicast IP address.

In one embodiment, the step of identifying comprises: identifying a plurality of multicast IP addresses designated as being associated with base stations providing coverage within the predefined geographical area; and the step of transmitting comprises transmitting the message content within a plurality of multicast messages, each using a corresponding one of the plurality of multicast IP addresses. Accordingly, where the geographical area is not covered by a single multicast address, multiple multicast IP addresses may be identified to provide the necessary coverage within the geographical area. The message is then sent using each of those multicast IP addresses.

In one embodiment, the method comprises the step of: for each message received having message content to be transmitted to user equipment within a predefined geographical area of the telecommunications network, allocating a unique message identifier to be transmitted with the message content. Accordingly, a message identifier may be used. This message identifier may be utilised by, for example, a base station to enable that base station to ignore any repeated multicast message which it has previously received.

In one embodiment, the step of transmitting comprises: transmitting the message identifier within each multicast message, each message identifier uniquely identifying different message content. Accordingly, each multi cast message may be transmitted with the message identifier.

In one embodiment, the method comprises the step of: maintaining a list of those base stations which have acknowledged receipt of at least one the plurality of multicast messages by determining whether at least one acknowledgement message incorporating the message identifier has been received from those base stations. It may that the same base station will be associated with a number of different multicast IP addresses. Should the same message be received by a base station on each of those different multicast IP addresses then the base station may only acknowledge and act upon one of these message in order to reduce traffic load on the network. Hence, should an acknowledgement be received which includes the identifier, then it can be assumed that the base station has received the message over at least one of the multiple different multicast IP addresses associated with that base station. Hence, it can be deduced that there is no necessity to retransmit the message even though no response.has been received for every multicast IP address messages.

In one embodiment, the step of transmitting comprises: transmitting a priority identifier within each multicast message to indicate that the multicast message it to be transmitted with a highest possible priority. Accordingly, the multicast messages take priority over all other traffic in the network to ensure that they are delivered as quickly as possible.

In one embodiment, the step of transmitting comprises: transmitting a transmission identifier within each multicast message to indicate that the message content is to be transmitted by recipient base stations within a cell broadcast message. Accordingly, the message may contain an indication to the base stations that the message that has been received it to be broadcast throughout its cell to all user equipment in accordance with whichever particular technique is utilised within that network environment. Again, it will be appreciated that this helps to ensure that this message is delivered by the base stations to active user equipment as quickly as possible.

According to a second aspect of the present invention, there is provided a computer program product operable, when executed on a computer, to perform the method steps of the first aspect.

According to a third aspect of the present invention, there is provided a controller operable to transmit a message to user equipment within a telecommunications network as claimed in claim 11.

In one embodiment, the multicast address logic is operable to allocate unique multicast IP addresses to be associated with predefined geographical areas.

In one embodiment, the multicast address logic is operable to receive an indication of each multicast IP address associated with each base station.

In one embodiment, the multicast address logic is operable to identify a plurality of multicast IP addresses designated as being associated with base stations providing coverage within the predefined geographical area; and the transmission logic is operable to transmit the message content within a plurality of multicast messages, each using a corresponding one of the plurality of multicast IP addresses.

In one embodiment, the multicast address logic is operable, for each message received having message content to be transmitted to user equipment within a predefined geographical area of the telecommunications network, to allocate a unique message identifier to be transmitted with the message content.

In one embodiment, the transmission logic is operable to transmit the message identifier within each multicast message, each message identifier uniquely identifying different message content.

In one embodiment, the multicast address logic is operable to maintain a list of those base stations which have acknowledged receipt of at least one the plurality of multicast messages by determining whether at least one acknowledgement message incorporating the message identifier has been received from those base stations.

In one embodiment, the transmission logic is operable to transmit a priority identifier within each multicast message to indicate that the multicast message it to be transmitted with a highest possible priority.

In one embodiment, the transmission logic is operable to transmit a transmission identifier within each multicast message to indicate that the message content is to be transmitted by recipient base stations within a cell broadcast message.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figure 1 illustrates a telecommunications network according to one embodiment;
Figure 2 illustrates the main features of the controller illustrated in Figure 1;
Figure 3 illustrates the main features of a base station illustrated in Figure 1;
Figure 4 illustrates the format of the multicast messages transmitted through the IP network shown in Figure 1; and
Figure 5 is a flow chart illustrating the main processing steps of the controller illustrated in Figure 2.

### DESCRIPTION OF THE EMBODIMENTS

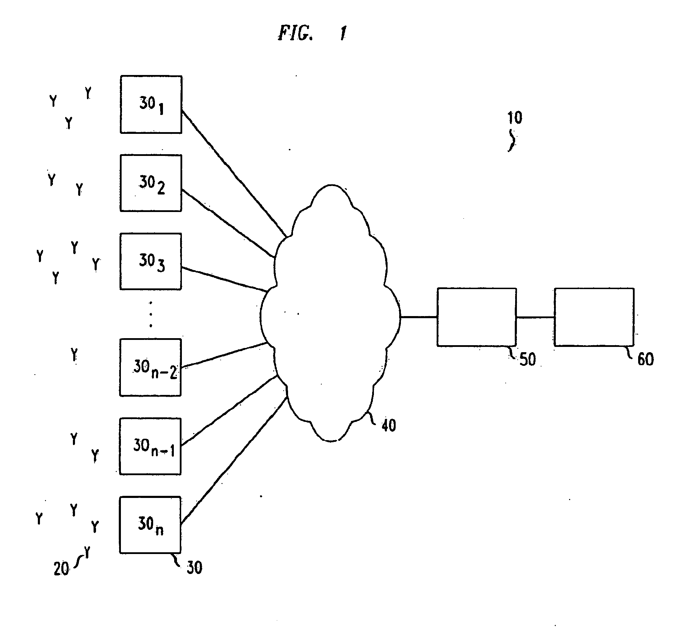

Figures 1 to 3 illustrates the main components of a telecommunications network, generally 10, accordingly to one embodiment. As shown in Figure 1, user equipment 20 roam through the telecommunications network 10. Base stations 30₁ to 30_{N} are provided which support respective cells. A number of such base stations 30₁ to 30_{N} are provided, which are distributed geographically in order to provide a wide area of wireless communications coverage to the user equipment 20. When user equipment 20 is within a cell supported by a base station 30₁ to 30_{N} then communications may be established between the user equipment 20 and that base station 30₁ to 30_{N} over an associated radio link. Each base station 30₁ to 30_{N} supports a number of sectors within each cell. Typically, a different antenna within a base station 30₁ to 30_{N} supports an associated sector. Accordingly, each base station 30₁ to 30_{N} has multiple antennas and signals sent through the different antennas are electronically weighted to provide this sectorised approach. Of course, it will be appreciated that Figure 1 illustrates a small subset of the total number of user equipment 20 and base stations 30₁ to 30_{N} that may be present in a typical communications network.

Each base station 30ₗ to *30_{N}* communicates over a backhaul IP network 40 with an alert controller 50. In this arrangement, the alert controller 50 is a separate, dedicated controller but it will be appreciated that this functionality may be provided within an existing controller within the telecommunications network 10.

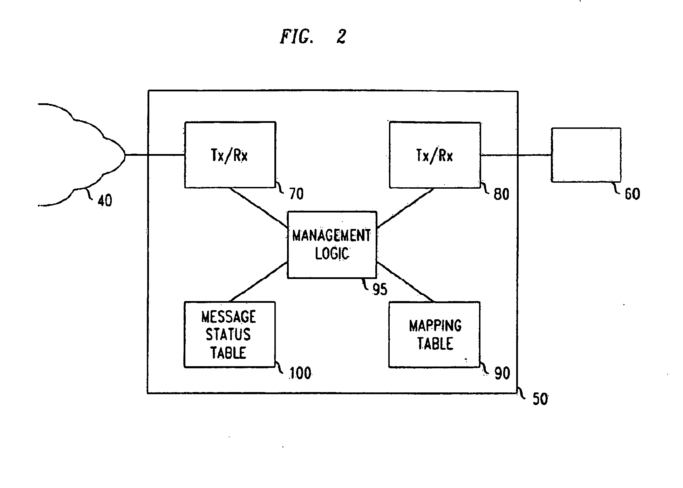

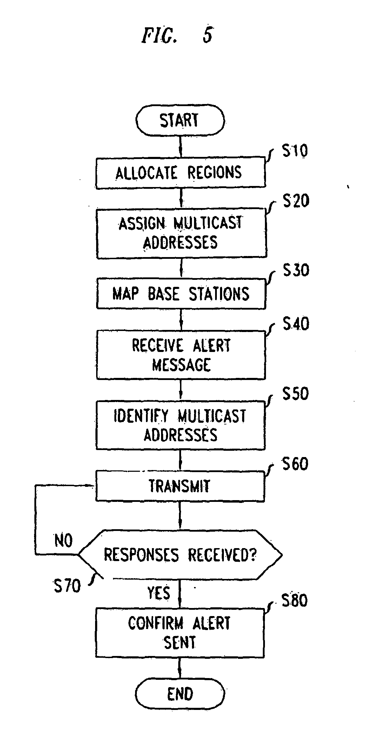

As shown in Figure 2, the alert controller 50 receives messages from an alert service agency 60 such as, for example, a government agency at the transceiver logic 80 and distributes these messages using the transceiver logic 70 as multicast transmissions over the backhaul IP network 40 to the relevant base stations for onward transmission to user equipment 20 supported by those base stations. The main steps of taken to perform this operation are described in Figure 5.

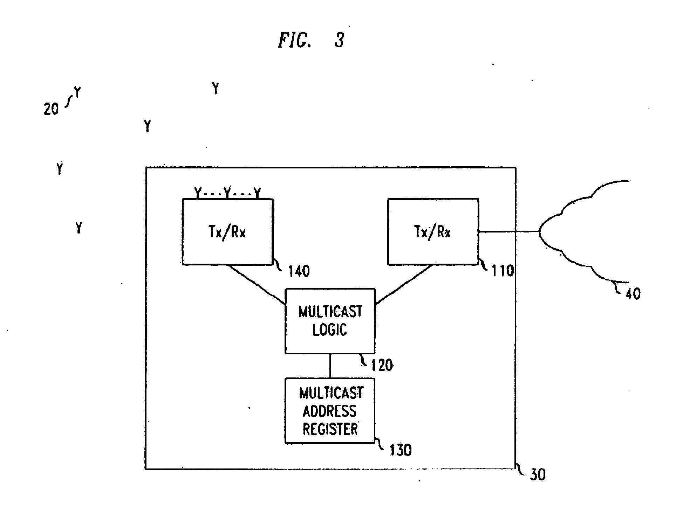

At step S10, the alert service agency 60 will define predefined geographical areas to which they may require alert messages to be sent. At step S20, the controller 50 allocates a multicast IP address to each of those predefined geographical areas and maintains this mapping in a mapping table 90. When commissioning each of the base stations 30₁ to 30_{N} their geographical location is known, as is the geographical coverage provided by that base stations to user equipment 20. Accordingly, an assessment of which geographical areas each base station will provide coverage within can be made. The base station is configured to receive multicast messages having multicast IP addresses for each of those geographical areas. For example, the alert service agency 60 may set geographical areas at country, county and city levels. In addition, the alert service agency may set geographical areas based on other criteria such as, for example, flood regions, coastal areas, earthquake zones, avalanche areas and the like. Likewise, the messages may only be intended for particular groups within these geographical areas such as, for example, a particular emergency service or government agency. A base station within a city will provide coverage within the predefined country, county and city geographical areas and possibly areas defined by other criteria. Therefore, as shown in Figure 3, that base station will be configured with more than one multicast IP address, one for each of those geographical areas (within IP v4 this is referred to as a "class D" address which is a type of IP address ranging from 224.0.0.0 to 239.255.255.255), and these addresses are stored in a multicast address register 130 at step 530. The base station then listens using transceiver logic 110 to alerts that may be sent over the IP network 40 from the alert controller 50 to all members of the multicast group associated with this multicast IP address. The base station joins the multicast groups (e.g. via internet group management protocol version 3, as defined in RFC 3376) and maintains its membership as long the base station remains in service. As mentioned previously, base stations belonging to different geographical areas may be configured with different multicast IP addresses so that the alert controller 50 can geographically scope the sending of alert messages. In addition, each base station may be configured with an alert area ID (or multiple alert area ID's), also stored in the multicast address register 130 and if the multicast message carrying the alert is not for any of these specific alert area ID's, then the base station may ignore that message.

The assessment of the mapping of the coverage provided by base stations onto the geographical areas may be implemented at the base station level or may determined by the alert controller 50. In either event, the alert controller 50 maintains that mapping in the mapping table 90. If this assessment is not made by the alert controller 50, then the information is provided to the controller typically upon commissioning of each base station and entered into the mapping table 90. The information in the mapping table 90 may then be used subsequently when determining whether all necessary base stations have acknowledged receipt of an alert message intended for a particular region.

At step S40, when an alert situation occurs, the alert service agency sends 60 a message to the alert controller 50 which contain message content, as well as an indication of the geographical area or areas for delivery of that message. Some form of integrity protection will generally be necessary to authenticate the origin and integrity of the originating alert message.

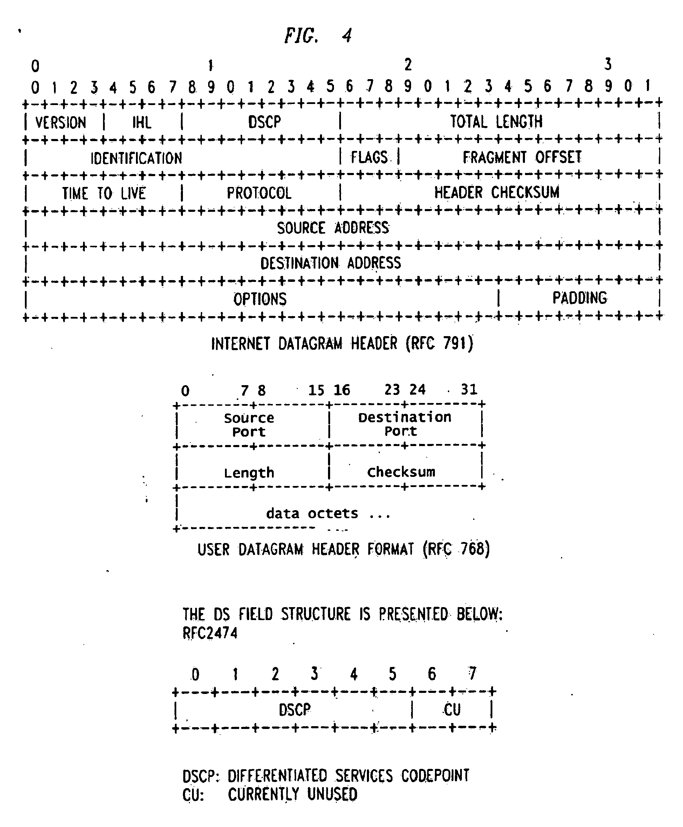

The management logic 95 will decode the indication of geographical area in the message and, at step S50, will determine the appropriate multicast IP addresses for the geographical areas specified in the originated alert message from the mapping table 90. The transceiver logic 70 then, at step S60, transmits the message over the IP network 40 to the base stations 30 to 30_{N} using each of those multicast IP addresses in accordance with the message format shown in Figure 4. This message may optionally be encoded with one or more alert area IDs. Only those base stations which are configured to receive messages having those multicast IP addresses (and optionally the alert area IDs) will respond, the remaining base stations will ignore the messages.

As shown in Figure 4, the message includes a source address and destination address. For outgoing messages, the source address is the alert controller 50 and the destination address is one of the multicast addresses. For acknowledgement messages, the source address will be the address of the base station and the destination address is the address of the alert controller 50. For user datagram protocol (UDP) messages, a port number may also be provided to indicate the message is an alert message. The differentiated services codepoint field is utilised to designate that the message is the highest priority possible. The payload will typically include a unique message identifier and optionally an indication that the message is intended only for particular user equipment and that the payload has been encoded in a particular manner which only the intended user equipment may decode.

On receipt of a multicast message having a multicast address to which the base station is subscribed, the base station will determine from a message identifier within the message payload whether that message content has been received by this base station previously and, if so may ignore the message even if it has been received using a different multicast address. Otherwise, the base station will acknowledge receipt of the message and perform a cell broadcast to all user equipment within its cell coverage area. The cell broadcast will contain the message content, together with an identifier identifying to the user equipment that this is an alert message. To account for transmission failures on the IP network from the base stations to the alert controller 50, the base stations may acknowledge receipt of a message previously received either with the same or different multicast address after receiving this repeated message a predetermined number of times.

On receipt of the message, the user equipment will identify the message as an alert message and provide an indication of this to the user. Optionally, where an indicator is included that the message is only intended for particular user equipment such as, for example, the emergency services, only user equipment preconfigured to decode such messages will display the alert.

The controller will receive the acknowledgement message from the base station over the IP network 40 and indicate in the message status table 100 that the base station has acknowledged that message; the acknowledgement includes an IP address identifying the sending base station, together with the message identifier. Each different message sent will have been allocated a different message identifier and the base stations associated with the multicast addresses is derived from the mapping table 90. As the acknowledgement messages are received (irrespective of which multicast address the acknowledgement message is in response to), the base stations are indicated in the message status table 100. A determination is then made by the management logic 95, at step S70, of the base stations yet to respond and a decision is made on whether to transmit another multicast message or whether to transmit unicast messages to each of the outstanding base stations. At step S80, a message is returned to the alert service agency 60 indicated that the message has been delivered throughout the region, optionally together with an indication of those locations were the message could not be delivered.

Hence, it can be seen that when the alert controller 50 receives a request to deliver an alert message to all base stations in a specific area, it sends this message to all base stations that need to receive this by sending it to all multicast IP addresses that are intended to cover the entire geographical region to be alerted. This is achieved by a protocol that encapsulates the alert message, the intended alert area ID's and a unique ID of the message, so that repetitions of the message (for resilience to transmission errors) can be detected. In this way, it can be seen that an alert message can be rapidly and efficiently targeted to specific geographical areas in a reliable and predictable manner.

Although illustrative embodiments of the invention have been disclosed in detail herein, with reference to the accompanying drawings, it is understood that the invention is not limited to the precise embodiment shown and that various changes and modifications can be effected therein by one skilled in the art without departing from the scope of the invention as defined by the appended claims

## Claims

1. A method of transmitting a message to user equipment (20) within a telecommunications network (10), said method comprising the steps of:
receiving (S40) a message having message content to be transmitted to user equipment within a predefined geographical area of said telecommunications network;
identifying (S50) at least one multicast IP address designated as being associated with base stations (30₁- 30ₙ) providing telecommunications coverage with user equipment within said predefined geographical area;
transmitting (S60) said message content within at least one multicast message, each multicast message using a corresponding one of said at least one multicast IP address, over an IP network to base stations providing telecommunications coverage within said predetermined geographical area for onward transmission to user equipment; **characterised by** further comprising the following steps :
maintaining a list of those base stations which have acknowledged receipt of said at least one multicast message;
determining (S70) those base stations yet to acknowledge receipt of said at least one multicast message; and
in the event that, after a predetermined period of time, those base stations yet to acknowledge receipt of said at least one multicast message exceeds a predetermined threshold number, determining whether to retransmit said at least one multicast message or to transmit a unicast message to each of those base stations determined as yet to acknowledge receipt of said at least one multicast message.

2. The method of claim 1, comprising the step of:
allocating (S20) unique multicast IP addresses to be associated with predefined geographical areas.

3. The method of claim 2, comprising the step of:
receiving an indication of each multicast IP address associated with each base station.

4. The method of claim 1, wherein said step of identifying comprises:
identifying a plurality of multicast IP addresses designated as being associated with base stations providing coverage within said predefined geographical area; and said step of transmitting comprises transmitting said message content within a plurality of multicast messages, each using a corresponding one of said plurality of multicast IP addresses.

5. The method of claim 1, comprising the step of:
for each message received having message content to be transmitted to user equipment within a predefined geographical area of said telecommunications network, allocating a unique message identifier to be transmitted with said message content.

6. The method of claim 5, wherein said step of transmitting comprises:
transmitting said message identifier within each multicast message, each message identifier uniquely identifying different message content.

7. The method of claim 6, comprising the step of:
maintaining a list of those base stations which have acknowledged receipt of at least one said plurality of multicast messages by determining whether at least one acknowledgement message incorporating said message identifier has been received from those base stations.

8. The method of claim 1, wherein said step of transmitting comprises:
transmitting a priority identifier within each multicast message to indicate that said multicast message it to be transmitted with a highest possible priority.

9. The method of claim 1, wherein said step of transmitting comprises:
transmitting a transmission identifier within each multicast message to indicate that said message content is to be transmitted by recipient base stations within a cell broadcast message.

10. A computer program product comprising means operable, when executed on a computer, to perform all the method steps of claim 1.

11. A controller (50) operable to transmit a message to user equipment (20) within a telecommunications network (10), said controller comprising:
reception logic (80) operable to receive a message having message content to be transmitted to user equipment within a predefined geographical area of said telecommunications network;
multicast address logic (90, 95) operable to identify at least one multicast IP address designated as being associated with base stations (30₁- 30ₙ) providing telecommunications coverage with user equipment within said predefined geographical area; and
transmission logic (70) operable to transmit said message content within at least one multicast message, each multicast message using a corresponding one of said at least one multicast IP address, over an IP network to base stations providing telecommunications coverage within said predetermined geographical area for onward transmission to user equipment, **characterized in that** said multicast address logic is operable to maintain a list of those base stations which have acknowledged receipt of said at least one multicast message, to determine those base stations yet to acknowledge receipt of said at least one multicast message, and in the event that, after a predetermined period of time, those base stations yet to acknowledge receipt of said at least one multicast message exceeds a predetermined threshold number, to determine whether cause said transmission logic to retransmit said at least one multicast message or to transmit a unicast message to each of those base stations determined as yet to acknowledge receipt of said at least one multicast message.

## Patentansprüche

1. Verfahren zur Übertragung einer Nachricht an ein Benutzergerät (20) innerhalb eines Telekommunikationsnetzwerks (10), wobei das besagte Verfahren die folgenden Schritte umfasst:
Empfangen (S40) einer Nachricht mit einem an ein Benutzergerät innerhalb eines vordefinierten geografischen Bereichs des besagten Telekommunikationsnetzwerk zu übertragenden Nachrichteninhalt;
Identifizieren (S50) mindestens einer Multicast-IP-Adresse, welche als mit Basisstationen **(30ₗ-30ₙ),** die eine Telekommunikationsversorgung mit dem Benutzergerät innerhalb des vordefinierten geografischen Bereichs bereitstellen, assoziiert ausgewiesen wurde;
Übertragen (S60) des besagten Nachrichteninhalts innerhalb mindestens einer Multicast-Nachricht, wobei jede Multicast-Nachricht eine entsprechende der mindestens einen Multicast-IP-Adresse benutzt, über ein IP-Netzwerk an Basisstationen, welche eine Telekommunikationsversorgung innerhalb des vorbestimmten geografischen Bereichs bereitstellen, zur Weiterübertragung an das Benutzergerät, **dadurch gekennzeichnet, dass** das Verfahren weiterhin die folgenden Schritte umfasst:
Verwalten einer Liste derjenigen Basisstationen, die den Empfang der besagten mindestens einen Multicast-Nachricht bestätigt haben;
Bestimmen (S70) derjenigen Basisstationen, die den Empfang der besagten mindestens einen Multicast-Nachricht noch bestätigen müssen; und
wenn, nach Ablauf einer vorbestimmten Zeitspanne, die Anzahl derjenigen Basisstationen, die den Empfang der besagten mindestens einen Multicast-Nachricht noch bestätigen müssen, einen vorbestimmten Grenzwert überschreitet, Bestimmen, ob die mindestens eine Multicast-Nachricht neu übertragen werden soll, oder eine Unicast-Nachricht an alle diejenigen Basisstationen, für welche bestimmt wurde, dass sie den Empfang der besagten mindestens einen Multicast-Nachricht noch bestätigen müssen, übertragen werden soll.

2. Das Verfahren nach Anspruch 1, den folgenden Schritt umfassend:
Zuordnen (S20) von mit den vordefinierten geografischen Bereichen zu assoziierenden eindeutigen Multicast-IP-Adressen.

3. Das Verfahren nach Anspruch 2, den folgenden Schritt umfassend:
Empfangen einer Angabe einer jeden mit jeder Basisstation assoziierten Multicast-IP-Adresse.

4. Das Verfahren nach Anspruch 1, wobei der besagte Schritt des Identifizierens umfasst:
Identifizieren einer Mehrzahl von Multicast-IP-Adressen, welche als mit Basisstationen, die eine Versorgung innerhalb des besagten vordefinierten geografischen Bereichs bereitstellen, assoziiert bezeichnet wurden; und wobei der besagte Schritt des Übertragens das Übertragen des besagten Nachrichteninhalts innerhalb einer Mehrzahl von Multicast-Nachrichten, welche jeweils eine entsprechende der besagten Mehrzahl von Multicast-IP-Adressen verwenden, umfasst.

5. Das Verfahren nach Anspruch 1, den folgenden Schritt umfassend:
Für jede empfangene Nachricht mit einem an ein Benutzergerät innerhalb eines vordefinierten geografischen Bereichs des besagten Telekommunikationsnetzwerks zu übertragenden Nachrichteninhalt, Zuordnen einer eindeutigen, mit dem besagten Nachrichteninhalt zu übertragenden Nachrichtenkennung.

6. Das Verfahren nach Anspruch 5, wobei der besagte Schritt des Übertragens umfasst:
Übertragen der besagten Nachrichtenkennung innerhalb einer jeden Multicast-Nachricht, wobei jede Nachrichtenkennung eindeutig einen unterschiedlichen Nachrichteninhalt identifiziert.

7. Das Verfahren nach Anspruch 6, den folgenden Schritt umfassend:
Verwalten einer Liste derjenigen Basisstationen, welche den Empfang mindestens einer der besagten Mehrzahl von Multicast-Nachrichten bestätigt haben, durch Ermitteln, ob zumindest eine Nachrichtenempfangsbestätigung, welche die besagte Nachrichtenkennung enthält, an diesen Basisstationen empfangen wurde.

8. Das Verfahren nach Anspruch 1, wobei der besagte Schritt des Übertragens umfasst:
Übertragen einer Prioritätskennung innerhalb einer jeden Multicast-Nachricht, um anzugeben, dass die besagte Multicast-Nachricht mit der höchstmöglichen Priorität zu übertragen ist.

9. Das Verfahren nach Anspruch 1, wobei der besagte Schritt des Übertragens umfasst:
Übertragen einer Übertragungskennung innerhalb einer jeden Multicast-Nachricht, um anzugeben, dass der besagte Nachrichteninhalt durch die Empfängerbasisstationen innerhalb einer Cell-Broadcast-Nachricht zu übertragen ist.

10. Computerprogrammprodukt mit Mitteln, die dazu ausgelegt sind, bei deren Ausführung auf einem Computer alle Verfahrensschritte gemäß Anspruch 1 durchzuführen.

11. Controller (50), betreibbar für die Übertragung einer Nachricht an ein Benutzergerät (20) innerhalb eines Telekommunikationsnetzwerks (10), wobei der besagte Controller umfasst:
Empfangslogik (80), betreibbar für den Empfang einer Nachricht mit einem an ein Benutzergerät innerhalb eines vordefinierten geografischen Bereichs des besagten Telekommunikationsnetzwerk zu übertragenden Nachrichteninhalt;
Multicast-Adresslogik (90, 95), betreibbar für die Identifizierung mindestens einer Multicast-IP-Adresse, welche als mit Basisstationen (30ₗ-30ₙ), die eine Telekommunikationsversorgung mit dem Benutzergerät innerhalb des vordefinierten geografischen Bereichs bereitstellen, assoziiert ausgewiesen wurde; und
Übertragungslogik (70), betreibbar für die Übertragung des besagten Nachrichteninhalts innerhalb mindestens einer Multicast-Nachricht, wobei jede Multicast-Nachricht eine entsprechende der mindestens einen Multicast-IP-Adresse benutzt, über ein IP-Netzwerk an Basisstationen, welche eine Telekommunikationsversorgung innerhalb des besagten vorbestimmten geografischen Bereichs bereitstellen, zur Weiterübertragung an ein Benutzergerät, **dadurch gekennzeichnet, dass** die besagte Multicast-Adresslogik betreibbar ist, um eine Liste derjenigen Basisstationen, die den Empfang der besagten mindestens einen Multicast-Nachricht bestätigt haben, zu verwalten, diejenigen Basisstationen, die den Empfang der besagten mindestens einen Multicast-Nachricht noch bestätigen müssen, zu bestimmen; und wenn, nach Ablauf einer vorbestimmten Zeitspanne, die Anzahl derjenigen Basisstationen, die den Empfang der besagten mindestens einen Multicast-Nachricht noch bestätigen müssen, einen vorbestimmten Grenzwert überschreitet, zu bestimmen, ob verursacht werden soll, dass die besagte Übertragungslogik mindestens eine Multicast-Nachricht neu überträgt oder eine Unicast-Nachricht an alle diejenigen Basisstationen, für welche bestimmt wurde, dass sie den Empfang der besagten mindestens einen Multicast-Nachricht noch bestätigen müssen, überträgt.

## Revendications

1. Procédé pour émettre un message à un équipement d'utilisateur (20) au sein d'un réseau de télécommunications (10), ledit procédé comprenant les étapes suivantes :
Réception (S40) d'un message ayant un contenu de message à émettre à l'équipement d'utilisateur à l'intérieur d'une zone géographique prédéfinie dudit réseau de télécommunications ;
Identification (S50) d'au moins une adresse IP de multidiffusion désignée comme étant associée à des stations de base (30₁-30ₙ) réalisant la couverture de télécommunications avec l'équipement d'utilisateur au sein de ladite zone géographique prédéfinie ;
Émission (S60) dudit contenu de message à l'intérieur d'au moins un message de multidiffusion, chaque message de multidiffusion utilisant une adresse IP de multidiffusion correspondante parmi l'au moins une adresse IP de multidiffusion, sur un réseau IP vers les stations de base qui réalisent la couverture de télécommunications au sein de ladite zone géographique prédéfinie pour une émission en avant vers l'équipement d'utilisateur, **caractérisé en ce qu'**il comprend en outre les étapes suivantes :
Maintien d'une liste des stations de base qui ont confirmé la réception dudit au moins un message de multidiffusion ;
Détermination (S70) des stations de base qui doivent encore confirmer la réception dudit au moins un message de multidiffusion ; et
dans le cas où, après une période prédéterminée, les stations de base qui doivent encore confirmer la réception dudit au moins un message de multidiffusion dépassent un nombre seuil prédéterminé, Détermination s'il faut réémettre ou non ledit au moins un message de multidiffusion ou émettre un message à diffusion unique vers chacune des stations de base déterminées comme devant encore confirmer la réception dudit au moins un message de multidiffusion.

2. Procédé selon la revendication 1, comprenant l'étape suivante :
Attribution (S20) d'adresses IP de multidiffusion uniques à associer aux zones géographiques prédéfinies.

3. Procédé selon la revendication 2, comprenant l'étape suivante :
Réception d'une indication de chaque adresse IP de multidiffusion associée à chaque station de base.

4. Procédé selon la revendication 1, dans lequel ladite étape d'identification comprend :
Identification d'une pluralité d'adresses IP de multidiffusion désignées comme étant associées aux stations de base qui réalisent la couverture au sein de ladite zone géographique prédéfinie ; et ladite étape d'émission comprenant l'émission dudit contenu de message au sein d'une pluralité de messages de multidiffusion, chacun utilisant une adresse IP de multidiffusion correspondante parmi la pluralité d'adresses IP de multidiffusion.

5. Procédé selon la revendication 1, comprenant l'étape suivante :
pour chaque message reçu ayant un contenu de message à émettre à l'équipement d'utilisateur à l'intérieur d'une zone géographique prédéfinie dudit réseau de télécommunications, attribution d'un identifiant de message unique à émettre avec ledit contenu de message.

6. Procédé selon la revendication 5, dans lequel ladite étape d'émission comprend : Émission dudit identifiant de message à l'intérieur de chaque message de multidiffusion, chaque identifiant de message identifiant individuellement différents contenus de message.

7. Procédé selon la revendication 6, comprenant l'étape suivante :
Maintien d'une liste des stations de base qui ont confirmé la réception dudit au moins un parmi ladite pluralité de messages de multidiffusion en déterminant si au moins un message de confirmation contenant ledit identifiant de message a été reçu de la part de ces stations de base.

8. Procédé selon la revendication 1, dans lequel ladite étape d'émission comprend :
Émission d'un identifiant de priorité à l'intérieur de chaque message de multidiffusion pour indiquer que ledit message de multidiffusion doit être émis avec une priorité la plus élevée possible.

9. Procédé selon la revendication 1, dans lequel ladite étape d'émission comprend :
Émission d'un identifiant d'émission à l'intérieur de chaque message de multidiffusion pour indiquer que le contenu dudit message doit être émis par les stations de base destinataires à l'intérieur d'un message de diffusion de cellule.

10. Produit de programme informatique comprenant des moyens pouvant être utilisés, lorsqu'il est exécuté sur un ordinateur, pour accomplir toutes les étapes du procédé selon la revendication 1.

11. Contrôleur (50) pouvant être utilisé pour émettre un message à un équipement d'utilisateur (20) au sein d'un réseau de télécommunications (10), ledit contrôleur comprenant :
une logique de réception (80) pouvant être utilisée pour recevoir un message ayant un contenu de message à émettre à l'équipement d'utilisateur à l'intérieur d'une zone géographique prédéfinie dudit réseau de télécommunications ;
une logique d'adresse de multidiffusion (90, 95) pouvant être utilisée pour identifier au moins une adresse IP de multidiffusion désignée comme étant associée à des stations de base (30₁-30ₙ) réalisant la couverture de télécommunications avec l'équipement d'utilisateur au sein de ladite zone géographique prédéfinie ; et
une logique d'émission (70) pouvant être utilisée pour émettre ledit contenu de message à l'intérieur d'au moins un message de multidiffusion, chaque message de multidiffusion utilisant une adresse IP de multidiffusion correspondante parmi l'au moins une adresse IP de multidiffusion, sur un réseau IP vers les stations de base qui réalisent la couverture de télécommunications au sein de ladite zone géographique prédéfinie pour une émission en avant vers l'équipement d'utilisateur, **caractérisé en ce que** ladite logique d'adresse de multidiffusion peut être utilisée pour maintenir une liste des stations de base qui ont confirmé la réception dudit au moins un message de multidiffusion, pour déterminer les stations de base qui doivent encore confirmer la réception dudit au moins un message de multidiffusion et, dans le cas où, après une période prédéterminée, les stations de base qui doivent encore confirmer la réception dudit au moins un message de multidiffusion dépassent un nombre seuil prédéterminé, pour déterminer s'il faut ou non ordonner à ladite logique d'émission de réémettre ledit au moins un message de multidiffusion ou d'émettre un message à diffusion unique vers chacune des stations de base déterminées comme devant encore confirmer la réception dudit au moins un message de multidiffusion.
